Europäisches Patentamt

European Patent Office

Office européen des brevets

(19)

(11) **EP 0 962 251 B1**

(12) **FASCICULE DE BREVET EUROPEEN**

(45) Date de publication et mention
de la délivrance du brevet:
**17.03.2004 Bulletin 2004/12**

(51) Int Cl.⁷: **B01J 29/42**, B01J 29/66,
C10G 45/64

(21) Numéro de dépôt: **99401060.1**

(22) Date de dépôt: **30.04.1999**

(54) **Procédé pour l'amélioration du point d'écoulement et catalyseur a base d'au moins une zéolithe MTT, TON, FER**

Verfahren zur Verbesserung des Stockpunktes und Katalysator auf Basis mindestens eines MTT, TON oder FER Zeolith

Process for improving the pour point and catalyst based on at least a MTT, TON, or FER zeolite

(84) Etats contractants désignés:
DE IT NL

(30) Priorité: **13.05.1998 FR 9806005**

(43) Date de publication de la demande:
**08.12.1999 Bulletin 1999/49**

(73) Titulaire: **Institut Français du Pétrole
92852 Rueil-Malmaison Cedex (FR)**

(72) Inventeurs:
• **Benazzi, Eric
78400 Chatou (FR)**
• **Kasztelan, Slavik
92500 Rueil Malmaison (FR)**
• **George-Marchal, Nathalie
69230 Saint Genis Laval (FR)**

(56) Documents cités:
EP-A- 0 372 632     FR-A- 2 758 278
FR-A- 2 760 385     US-A- 4 380 685
US-A- 4 585 748     US-A- 5 173 461
US-A- 5 525 209

## Description

La présente invention concerne un procédé pour améliorer le point d'écoulement de charges contenant des paraffines, linéaires et/ou peu ramifiées, longues (plus de 10 atomes de carbone), en particulier pour convertir, avec un bon rendement, des charges possédant des points d'écoulement élevés en au moins une coupe présentant un point d'écoulement bas et un haut indice de viscosité pour les bases huiles.
Le catalyseur utilisé comporte au moins une zéolithe de type structural MTT, TON ou FER ou toutes combinaisons possibles de ces dernières, au moins un élément hydro-désydrogénant, de préférence choisi parmi les éléments du groupe VIB et du groupe VIII de la classification périodique, au moins un élément promoteur déposé qui est choisi dans le groupe formé par le bore, le silicium, le phosphore, éventuellement au moins un élément du groupe VIIA, et éventuellement au moins un élément du groupe VIIB.

L'invention concerne également un catalyseur tel que précédemment décrit mais contenant comme élément promoteur le silicium et éventuellement le phosphore et/ou le bore. Est également revendiqué l'utilisation de ce catalyseur pour la conversion des hydrocarbures et le procédé de réduction du point d'écoulement.

## Art antérieur

Les lubrifiants de haute qualité sont d'une importance primordiale pour le bon fonctionnement des machines modernes, des automobiles, et des camions. Cependant, la quantité de paraffines issues directement du pétrole, non traitées, et possédant les propriétés adéquates pour constituer des bons lubrifiants est très faible par rapport à la demande croissante dans ce secteur.

Le traitement des fractions pétrolières lourdes à fortes teneurs en paraffines linéaires ou peu ramifiées est nécessaire afin d'obtenir des huiles de base de bonne qualité et ce avec les meilleurs rendements possibles, par une opération qui vise à éliminer les paraffines linéaires ou très peu branchées, des charges qui seront ensuite utilisées en tant que huiles de base ou en tant que kérosène ou carburéacteur (jet fuel).

En effet, les paraffines de haut poids moléculaire qui sont linéaires ou très faiblement branchées et qui sont présentes dans les huiles ou dans le kérosène ou carburéacteur conduisent à des points d'écoulement hauts et donc à des phénomènes de figeage pour des utilisations à basse température. Afin de diminuer les valeurs des points d'écoulement, ces paraffines linéaires pas ou très peu branchées doivent être entièrement ou partiellement éliminées.

Cette opération peut s'effectuer par extraction par des solvants tels que le propane ou la méthyl-éthyl cétone, on parle alors de déparaffinage au propane ou à la méthyl éthyl-cétone (MEK). Cependant, ces techniques sont coûteuses, longues et pas toujours aisées à mettre en oeuvre.

Un autre moyen est un craquage sélectif des chaînes paraffiniques linéaires les plus longues qui conduit à la formation de composés de poids moléculaire plus faible dont une partie peut être éliminée par distillation.

Compte tenu de leur sélectivité de forme les zéolithes sont parmi les catalyseurs les plus utilisés. L'idée qui prévaut à leur utilisation est qu'il existe des structures zéolithiques dont les ouvertures de pores sont telles qu'elles permettent l'entrée dans leur microporosité des paraffines linéaires longues ou très peu branchées mais en excluent les paraffines ramifiées, les napthènes et les aromatiques. Ce phénomène conduit ainsi à un craquage sélectif des paraffines linéaires ou très peu branchées.

Des catalyseurs à base de zéolithes ayant des tailles de pores intermédiaires telles que les ZSM-5, ZSM-11, ZSM-12, ZSM-22, ZSM-23, ZSM-35 et ZSM-38 ont été décrits pour leur utilisation dans ces procédés.

Par ailleurs, il a été constaté que les procédés utilisant ces zéolithes (ZSM-5, ZSM-11, ZSM-12, ZSM-22, ZSM-23, ZSM-35 et ZSM-38) permettent d'obtenir des huiles par craquage de charges contenant des quantités de paraffines linéaires ou très peu branchées inférieures à 50 % poids. Cependant, pour des charges contenant des quantités supérieures de ces composés il est apparu que leur craquage conduit à la formation de quantités importantes de produits de poids moléculaires plus faibles, tels que du butane, propane, éthane et méthane, ce qui réduit considérablement le rendement en produits recherchés.

Pour pallier à ces inconvénients, la demanderesse a porté ses efforts de recherche sur la mise au point de catalyseurs contenant au moins une zéolithe de type structural MTT, TON ou FER ou toutes combinaisons possibles de ces dernières, et de préférence, contenant également au moins un élément choisi parmi les éléments du groupe VIB et du groupe VIII de la classification périodique, du bore et/ou du silicium, éventuellement du phosphore, éventuellement au moins un élément du groupe VIIA favorisant également une isomérisation de ces composés.

La présente invention propose un procédé catalytique pour la réduction du point d'écoulement à base de tels catalyseurs.

## Objet de l'invention

L'objet de l'invention est un procédé selon la revendication 1, un catalyseur selon la revendication 9 et une utilisation selon la revendication 17. Un objet de l'invention est un procédé pour l'amélioration du point d'écoulement d'une charge paraffinique comportant des paraffines de plus de 10 atomes de carbone, dans lequel la charge à traiter est mise au contact d'un catalyseur contenant au moins une zéolithe de type structural MTT, TON ou FER ou toutes combinaisons possibles de ces dernières, au moins un élément hydro-désydrogénant, de préférence choisi parmi les éléments du groupe VIB et du groupe VIII de la classification périodique, au moins un élément promoteur déposé choisi dans le groupe formé par le bore, le silicium, le phosphore, éventuellement au moins un élément du groupe VIIA, éventuellement au moins un élément du groupe VIIB à une température comprise entre 170 et 500°C, une pression entre 1 et 250 bar et une vitesse volumique horaire entre 0,05 et 100 h$^{-1}$, en présence d'hydrogène à raison de 50 à 2000 l/l de charge.

Les zéolithes comprises dans le catalyseur selon l'invention possèdent les types structuraux TON, MTT ou FER et sont décrites dans l'ouvrage "Atlas of Zeolite Structure Types", W.M. Meier, D.H. Olson and Ch. Baerlocher, 4th Revised edition, 1996, Elsevier.

Ledit catalyseur présente une activité et une sélectivité en déparaffinage (amélioration du point écoulement) plus importante que les formules catalytiques à base de zéolithes MTT, TON et FER connues dans l'art antérieur. Sans vouloir être lié par une quelconque théorie, il semble que cette activité particulièrement élevée des catalyseurs de la présente invention est due aux renforcement de l'acidité du catalyseur par la présence de l'élément promoteur, en particulier du bore et/ou du silicium sur la matrice ce qui induit une amélioration des propriétés par rapport aux catalyseurs utilisés habituellement.

Avantageusement ce procédé permet de convertir une charge possédant un haut point d'écoulement en un produit possédant un point d'écoulement plus bas. Il est donc applicable pour la réduction du point d'écoulement des gazoles par exemple. Il permet également de convertir des charges plus lourdes en huiles possédant un haut indice de viscosité.

La charge est composée, entre autres, de paraffines linéaires et/ou peu ramifiées comportant au moins 10 atomes de carbone, de préférence de 15 à 50 atomes de carbone et avantageusement de 15 à 40 atomes de carbone. Les charges lourdes (pour faire des huiles) contiennent des paraffines ayant essentiellement plus de 30 atomes de carbone, les gazoles contiennent généralement des paraffines à 10-30 atomes de carbone.

Les produits isomérisés, présents dans les produits finaux, peuvent contenir entre environ 65 et 80 % de produits monobranchés et entre environ 20 et 35 % de produits multibranchés. On entend par produits monobranchés des paraffines linéaires comportant un seul groupe méthyle, et par produits dibranchés des paraffines linéaires comportant 2 groupes méthyles qui ne sont pas portés par le même atome de carbone. Par extension on définit les multibranchés.

D'autre part le catalyseur comporte au moins une fonction hydro-déshydrogénante, par exemple un métal du groupe VIII (noble ou non noble) ou une combinaison d'au moins un métal ou composé du groupe VIII (non noble) et d'au moins un métal ou composé du groupe VI, et la réaction est réalisée dans les conditions décrites ci-après.

L'utilisation du catalyseur selon l'invention dans les conditions décrites ci-dessus permet, notamment, la production de produits à faible point d'écoulement avec de bons rendements, et à haut indice de viscosité pour les huiles.

## Description détaillée de l'invention

La zéolithe de type structural TON regroupe les zéolithes; Theta, ISI-1, NU-10, KZ-2 et ZSM-22 (décrite dans le brevet US 4810357). La zéolithe de type structural MTT regroupe les zéolithes ZSM-23 (décrite dans les brevets US 4076842 et US 4104151), EU-13, ISI-4, KZ-1 et SSZ-32 (décrite dans le brevet US 5053373). La zéolithe de type structural FER regroupe les zéolithes suivantes qui ont essentiellement la même structure Ferrierite, FU-9, NU-23, ZSM-35 (décrite dans le brevet 4016245), ISI-6.

Les zéolithes MTT, TON et FER utilisées dans le catalyseur selon l'invention peuvent aussi être préparées en milieu fluorure. Sont préférés les zéolithes NU-10, EU-13, NU-23.

Le rapport Si/Al global des zéolithes entrant dans la composition des catalyseurs selon l'invention ainsi que la composition chimique des échantillons sont déterminés par fluorescence X et absorption atomique

Les rapports Si/Al des zéolithes décrites ci-dessus sont celles obtenues à la synthèse selon les modes opératoires décrits dans les différents documents cités ou bien obtenus après des traitements de désalumination post-synthèse bien connus de l'homme de l'art, tels que et à titre non exhaustif les traitements hydrothermiques suivis ou non d'attaques acides ou bien encore les attaques acides directes par des solutions d'acides minéraux ou organiques.

Les zéolithes entrant dans la composition des catalyseurs selon l'invention sont calcinées et échangées par au moins un traitement par une solution d'au moins un sel d'ammonium de manière à obtenir la forme ammonium des zéolithes qui une fois calcinée conduisent à la forme hydrogène des dites zéolithes.

Les zéolithes entrant dans la composition du catalyseur selon l'invention sont au moins en partie, de préférence pratiquement totalement, sous forme acide, c'est-à-dire sous forme hydrogène (H$^+$). Le rapport atomique Na/T est généralement inférieur à 10% et de préférence inférieur à 5% et de manière encore plus préférée inférieur à 1%.

Le catalyseur objet de l'invention contient au moins une zéolithe de type structural MTT, TON ou FER ou toutes combinaisons possibles de ces dernières en mélange avec une matrice , et éventuellement au moins un élément hydro-déshydrogénant, qui de préférence, est un métal noble ou une combinaison d'au moins un métal ou composé du groupe VI et d'au moins un métal ou composé du groupe VIII.

Dans le cas où l'élément hydro-déshydrogénant est au moins un métal du groupe VIII, de préférence un métal noble et avantageusement choisi dans le groupe formé par le Pt et le Pd, il est introduit dans le tamis moléculaire par exemple par imprégnation à sec, par échange ionique ou toute autre méthode connue de l'homme du métier, ou bien il est introduit dans la matrice.

Le catalyseur de la présente invention renferme généralement en % poids par rapport à la masse totale du catalyseur au moins un métal choisi dans les groupes suivants et avec les teneurs suivantes :

- 0,1 à 60%, de préférence de 0,1 à 50% et de manière encore plus préférée de 0,1 à 40% d'au moins un métal hydro-désydrogénant de préférence choisi parmi le groupe VIB et le groupe VIII (% oxyde),
- 0,1 à 99,7%, de préférence de 1 à 99% d'au moins une matrice minérale poreuse amorphe ou mal cristallisée de type oxyde,
- 0,1 à 90%, de préférence de 0,1 à 80% et de manière encore plus préférée de 0,1 à 70% d'au moins une zéolithe de type structural TON, MTT ou FER comme définis précédemment.
  le dit catalyseur étant caractérisé en ce qu'il renferme en outre,
- de 0,1 à 20%, de préférence de 0,1 à 15% et de manière encore plus préférée de 0,1 à 10% d'élément promoteur déposé (% oxyde) choisi dans le groupe formé par B, Si, P,
  et éventuellement
- de 0 à 20% d'au moins un élément du groupe VIIB (% oxyde) et de préférence le manganèse, le rhénium,
- de 0 à 20%, de préférence de 0,1 à 15% et de manière encore plus préférée de 0,1 à 10% de poids d'au moins un halogène, de préférence le fluor.

Un catalyseur préféré de l'invention contient comme élément promoteur du bore et/ou du silicium et éventuellement de 0 à 20%, de préférence de 0,1 à 15% et de manière encore plus préférée de 0,1 à 10% de phosphore (% oxyde).

Un catalyseur encore plus préféré contient comme élément promoteur du silicium. Le phosphore et/ou bore peuvent éventuellement être présents.

Le catalyseur selon l'invention renferme ainsi généralement et globalement de 0,1 à 65% (pds oxyde), de préférence 0,1 à 60% et avantageusement de 0,1 à 55% de silicium (contenu dans la charpente de la zéolithe + silicium déposé qui est sous forme amorphe et en général principalement localisé sur la matrice).

Les métaux du groupe VIB et du groupe VIII du catalyseur de la présente invention peuvent être présent en totalité ou partiellement sous la forme métallique et/ou oxyde et/ou sulfure.

La fonction hydrogénante est assurée par au moins un élément des groupes VIB ou VIII Parmi les éléments du groupe VIB, le molybdène et le tungstène sont préférés.

Dans le cas où le catalyseur comporte un métal hydrogénant du groupe VIII de préférence un métal noble et avantageusement le Pt et/ou le Pd, le catalyseur est réduit dans le réacteur en présence d'hydrogène et dans des conditions bien connues de l'homme de l'art.

La teneur en métal ainsi introduit, exprimée en % poids par rapport à la masse de tamis moléculaire engagée, est généralement inférieure à 5 %, de préférence inférieure à 3 % et la teneur en métal noble est dans le catalyseur généralement inférieure à 2 % poids.

Dans le cas ou le métal hydrogénant appartient au groupe VIII, et de préférence est le Pt et/ou le Pd, il peut également et très avantageusement être déposé sur le support par tout procédé connu de l'homme de l'art et permettant le dépôt du métal sur le tamis moléculaire. On peut utiliser la technique d'échange cationique avec compétition où le compétiteur est de préférence le nitrate d'ammonium, le rapport de compétition étant au moins égal à environ 20 et avantageusement d'environ 30 à 200. Dans le cas du platine ou du palladium, on utilise habituellement un complexe tétramine du platine ou un complexe tétramine du palladium : ces derniers se déposeront alors pratiquement en totalité sur le tamis moléculaire. Cette technique d'échange cationique peut également être utilisée pour déposer directement le métal sur la poudre de tamis moléculaire, avant son mélange éventuel avec une matrice. Le dépôt du métal (ou des métaux) du groupe VIII est suivi en général d'une calcination sous air ou oxygène, usuellement entre 300 et 600°C durant 0,5 à 10 heures, de préférence entre 350°C et 550°C durant 1 à 4 heures. On peut procéder ensuite à une réduction sous hydrogène, généralement à une température comprise entre 300 et 600°C pendant 1 à 10 heures, de préférence on opérera entre 350° et 550°C pendant 2 à 5 heures.

On peut également déposer le platine et/ou le palladium non plus directement sur le tamis moléculaire, mais sur la matrice (le liant aluminique), avant ou après l'étape de mise en forme, en mettant en oeuvre un échange anionique avec de l'acide hexachloroplatinique, de l'acide hexachloropalladique et/ou du chlorure de palladium en présence d'un agent compétiteur, par exemple l'acide chlorhydrique. En général après le dépôt de platine et/ou de palladium, le catalyseur est comme précédemment soumis à une calcination puis réduit sous hydrogène comme indiqué ci-dessus.

Les sources d'élément du groupe VIB qui peuvent être utilisées sont bien connues de l'homme du métier. Par exemple, parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, l'acide phosphomolybdique, l'acide phosphotungstique et leurs sels. On utilise de préférence les oxydes et les sels d'ammonium tels que le molybdate d'ammonium, l'heptamolybdate d'ammonium et le tungstate d'ammonium

Le catalyseur de la présente invention peut renfermer un métal du groupe VIII tel que fer, ruthénium, rhodium, palladium, osmium, iridium, platine et de préférence cobalt, nickel. D'une manière avantageuse on utilise les associations GVI-GVIII non noble de métaux suivantes : nickel-molybdène, cobalt-molybdène, fer-molybdène, fertungstène, nickel-tungstène, cobalt-tungstène, les associations préférées sont : nickel-molybdène, nickel-tungstène. Il est également possible d'utiliser des associations de trois métaux par exemple nickel-cobalt-molybdène.

Les sources d'élément du groupe VIII qui peuvent être utilisées sont bien connues de l'homme du métier. Par exemple, on utilisera les nitrates, les sulfates, les phosphates, les halogénures par exemple, chlorures, bromures et fluorures, les carboxylates par exemple acétates et carbonates.

Le catalyseur de l'invention peut renfermer au mois un élément du groupe VIIB tel que le manganèse, le technétium, le rhénium ; le manganèse et le rhénium étant préférés.

Les sources d'élément du groupe VIIB qui peuvent être utilisées sont bien connues de l'homme du métier. On utilise de préférence les sels d'ammonium, les nitrates et les chlorures.

Le catalyseur de la présente invention renferme donc également au moins une matrice minérale poreuse amorphe ou mal cristallisée généralement de type oxyde. On peut citer à titre d'exemple non limitatif les alumines, les silices, les silice-alumines. On peut choisir également les aluminates. On préfère utiliser des matrices contenant de l'alumine, sous toutes ces formes connues de l'Homme du métier, et de manière encore plus préférée les alumines, par exemple l'alumine gamma.

On peut aussi avantageusement utiliser des mélanges d'alumine et de silice, des mélanges d'alumine et de silice-alumine.

L'élément promoteur (P, B, Si) est déposé sur le catalyseur. Il a été introduit sur le support contenant au moins la zéolithe et la matrice, et contenant également de préférence le ou les métaux hydrogénants.

L'élément promoteur, et en particulier le silicium introduit sur le support selon l'invention, est principalement localisé sur la matrice du support et peut être caractérisé par des techniques telles que la microsonde de Castaing (profil de répartition des divers éléments), la microscopie électronique par transmission couplée à une analyse X des composants du catalyseurs, ou bien encore par l'établissement une cartographie de répartition des éléments présents dans le catalyseur par microsonde électronique. Ces analyses locales vont fournir la localisation des divers éléments, en particulier la localisation de l'élément promoteur, notamment de la silice amorphe sur la matrice du support due à l'introduction du silicium promoteur selon l'invention. La localisation du silicium de la charpente de la zéolithe contenue dans le support est aussi révélée. Par ailleurs, une estimation quantitative des teneurs locales en silicium ou autres éléments promoteur peut-être effectuée.

D'autre part, la RMN du solide du $^{29}$Si à rotation à l'angle magique est une technique qui permet de détecter la présence de silice amorphe introduite dans le catalyseur selon le mode opératoire décrit dans la présente invention.

La source de bore peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tels que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

La source de phosphore préférée est l'acide orthophosphorique $H_3PO_4$, mais ses sels et esters comme les phosphates d'ammonium conviennent également.— Le phosphore peut par exemple être introduit sous la forme d'un mélange d'acide phosphorique et un composé organique basique contenant de l'azote tels que l'ammoniaque, les amines primaires et secondaires, les amines cycliques, les composés de la famille de la pyridine et des quinoléines et les composés de la famille du pyrrole.

L'imprégnation du molybdène peut être facilitée par ajout d'acide phosphorique dans les solutions de paramolybdate d'ammonium, ce qui permet d'introduire aussi le phosphore de façon à promouvoir l'activité catalytique. D'autres composés du phosphore peuvent être utilisés comme il est bien connu de l'homme du métier.

De nombreuses sources de silicium peuvent être employées. Ainsi, on peut utiliser l'orthosilicate d'éthyle Si(OEt)$_4$, les siloxanes, les polysiloxanes, les silicones, les émulsions de silicones, les silicates d'halogénures comme le fluorosilicate d'ammonium $(NH_4)_2 SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'une émulsion de silicone dans l'eau.

Le catalyseur de l'invention peut également renfermer au moins un halogène, le fluor étant préféré.

Les sources d'élément du groupe VIIA qui peuvent être utilisées sont bien connues de l'homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

L'élément promoteur et éventuellement l'élément choisi dans le groupe VIIA des halogénures, peuvent être introduits par imprégnation dans le catalyseur à divers niveaux de la préparation et de diverses manières.

D'une façon générale on prépare un mélange contenant au moins une matrice, de la zéolithe, et éventuellement au moins un métal hydrogénant choisi parmi les métaux du groupe VIII et du groupe VIB. Le mélange est ou n'est pas mis en forme. Il peut contenir éventuellement au moins un élément du groupe VIIB.

L'imprégnation du mélange (avec au moins une solution contenant au moins un élément promoteur et éventuellement l'halogène ) est de préférence effectuée par la méthode d'imprégnation dite "à sec" bien connue de l'homme du métier. L'imprégnation peut être effectuée en une seule étape par une solution contenant l'ensemble des éléments constitutifs du catalyseur final, ou par une ou plusieurs opérations d'imprégnation par exemple avec excès de solution sur le précurseur calciné.

Dans le cas où le catalyseur contient du bore, une méthode préférée selon l'invention consiste à préparer une solution aqueuse d'au moins un sel de bore tel que le biborate d'ammonium ou le pentaborate d'ammonium en milieu alcalin et en présence d'eau oxygénée et à procéder à une imprégnation dite à sec, dans laquelle on remplit le volume des pores du précurseur par la solution contenant le bore.

Dans le cas où le catalyseur contient du silicium on utilisera de préférence une solution d'un composé du silicium de type silicone.

Dans le cas où le catalyseur contient du bore et du silicium, le dépôt de bore et de silicium peut aussi se faire de manière simultanée en utilisant une solution contenant un sel de bore et un composé du silicium de type silicone. Ainsi, par exemple (et dans le cas préféré où par exemple le précurseur est un catalyseur de type nickel-molybdène supporté sur un support contenant de la zéolithe et de l'alumine) il est possible d'imprégner ce précurseur par de la solution aqueuse de biborate d'ammonium et de silicone Rhodorsil E1P de la société Rhône Poulenc, de procéder à un séchage par exemple à 80°C, puis d'imprégner par une solution de fluorure d'ammonium, de procéder à un séchage par exemple à 80°C, et de procéder à une calcination par exemple et de façon préférée sous air en lit traversé, par exemple à 500°C pendant 4 heures.

Dans le cas où le catalyseur contient au moins un élément du groupe VIIA, on imprègne le mélange par au moins une solution d'au moins un élément du groupe VIIA, avant, après ou simultanément à l'imprégnation par la solution de l'élément promoteur. Il est par exemple possible d'imprégner le catalyseur par une solution de fluorure d'ammonium, de procéder à un séchage par exemple à 80°C, et de procéder à une calcination par exemple et de façon préférée sous air en lit traversé, par exemple à 500°C pendant 4 heures.

D'autres séquences d'imprégnation peuvent être mises en oeuvre pour obtenir le catalyseur de la présente invention.

Dans le cas où le catalyseur contient un élément du groupe VIIB déposé, on imprègne le mélange par au moins une solution d'au moins un élément du groupe VIIB, avant, après ou simultanément à l'imprégnation par la solution de l'élément promoteur.

Dans le cas où les métaux sont introduits en plusieurs imprégnations des sels précurseurs correspondants, une étape de séchage intermédiaire du catalyseur est généralement effectuée à une température généralement comprise entre 60 et 250°C et avantageusement une étape de calcination intermédiaire du catalyseur est généralement effectuée à une température comprise entre 150 et 800 °C, généralement entre 250 et 600 °C.

Généralement, afin de terminer la préparation du catalyseur, on laisse reposer le solide humide sous une atmosphère humide à une température comprise entre 10 et 80°C, puis on sèche le solide humide obtenu à une température comprise entre 60 et 150°C, et enfin on calcine le solide obtenu à une température comprise entre 150 et 800°C, généralement entre 250 et 600 °C.

Un catalyseur préféré de l'invention contient du bore et du silicium, et avantageusement il contient en outre du phosphore. De préférence, il contient également du nickel et du molybdène ou du cobalt et du molybdène, ou du nickel et du tungstène.

De façon préférée, un catalyseur NiMo ou NiMoP sur un support comprenant un mélange d'alumine et de zéolithe est imprégné par une solution aqueuse de bore puis une solution aqueuse de silicium (ou l'inverse solution de silicium puis de bore) ou est imprégnée par une solution aqueuse commune de bore et de silicium.

Ainsi, il est possible d'imprégner dans un premier temps la solution contenant le silicium, de sécher, de calciner et d'imprégner la solution contenant le bore de sécher et de procéder à une calcination finale.

Il est également possible d'imprégner dans un premier temps la solution contenant le bore, de sécher, de calciner et d'imprégner la solution contenant le silicium de sécher et de procéder à une calcination finale.

Il est aussi possible d'imprégner dans un premier temps le précurseur avec une solution contenant du phosphore, de sécher, de calciner puis d'imprégner le solide obtenu avec la solution contenant le bore, de sécher, de calciner et d'imprégner la solution contenant le silicium de sécher et de procéder à une calcination finale.

De façon plus particulière, le procédé de préparation du catalyseur de la présente invention comprend les étapes suivantes :

a) on prépare un mélange ci-après dénommé le précurseur, renfermant au moins les composés suivants : au moins une matrice poreuse amorphe ou mal cristallisée, au moins une zéolithe, éventuellement au moins un élément du groupe VIB, et éventuellement au moins un élément du groupe VIII, éventuellement au moins un élément du groupe VIIB, éventuellement du phosphore, le tout étant de préférence mis en forme et séché,

b) on imprègne le précurseur défini à l'étape a), par une solution aqueuse contenant du bore et/ou du silicium, éventuellement du phosphore et éventuellement au moins un élément du groupe VIIA,

puis on sèche et on calcine pour terminer le procédé. Et avantageusement on termine le procédé de la façon suivante :

c) on laisse reposer le solide humide sous une atmosphère humide à une température comprise entre 10 et 80°C,

d) on sèche le solide humide obtenu à l'étape b) à une température comprise entre 60 et 150°C,

e) on calcine le solide obtenu à l'étape c) à une température comprise entre 150 et 800°C.

L'étape b) ci-dessus peut être réalisée selon les méthodes classiques de l'homme du métier.

L'étape b) nécessite de disposer d'une solution aqueuse contenant du bore et/ou du silicium et donc est différente des méthodes classiques de dépôt du B et/ou du Si connues de l'homme du métier. Une méthode préférée selon l'invention consiste à préparer une solution aqueuse d'au moins un sel de bore tel que le biborate d'ammonium ou le pentaborate d'ammonium en milieu alcalin et en présence d'eau oxygénée et d'introduire dans la solution un composé du silicium de type silicone et à procéder à une imprégnation dite à sec, dans laquelle on remplit le volume des pores du précurseur par la solution contenant le B et le Si. Cette méthode de dépôt du B et du Si est meilleure que la méthode conventionnelle employant une solution alcoolique d'acide borique ou une solution d'orthosilicate d'éthyle dans l'alcool.

L'élément hydro-désydrogénant est introduit après la calcination (par imprégnation) s'il ne l'a pas été lors de l'étape a).

Les catalyseurs obtenus par la présente invention sont mise en forme sous la forme de grains de différentes formes et dimensions. Ils sont utilisés en général sous la forme d'extrudés cylindriques ou polylobés tels que bilobés, trilobés, polylobés de forme droite ou torsadée, mais peuvent éventuellement être fabriqués et employés sous la forme de poudre concassées, de tablettes, d'anneaux, de billes, de roues. Ils présentent une surface spécifique mesurée par adsorption d'azote selon la méthode BET (Brunauer, Emmett, Teller, J. Am. Chem. Soc., vol. 60, 309-316 (1938)) comprise entre 50 et 600 $m^2$/g, un volume poreux mesuré par porosimétrie au mercure compris entre 0,2 et 1,5 $cm^3$/g et une distribution en taille de pores pouvant être monomodale, bimodale ou polymodale.

Les catalyseurs de la présente invention peuvent éventuellement être soumis à un traitement de sulfuration permettant de transformer, au moins en partie, les espèces métalliques en sulfure avant leur mise en contact avec la charge à traiter. Ce traitement d'activation par sulfuration est bien connu de l'homme du métier et peut être effectué par toute méthode déjà décrite dans la littérature.

Dans le cas des métaux non nobles, une méthode de sulfuration classique bien connue de l'homme du métier consiste à chauffer en présence d'hydrogène sulfuré à une température comprise entre 150 et 800°C, de préférence entre 250 et 600°C, généralement dans une zone réactionnelle à lit traversé.

Le catalyseur selon l'invention est utilisé pour la conversion des hydrocarbures, et en particulier dans un procédé de réduction du point d'écoulement tel que défini ci-après.

Les charges qui peuvent être traitées selon le procédé de l'invention sont avantageusement des fractions possédant des points d'écoulement relativement hauts dont on désire diminuer la valeur.

Le procédé selon l'invention peut être utilisé pour traiter des charges variées allant de fractions relativement légères telles que les kérosènes et carburéacteurs jusqu'à des charges possédant des points d'ébullition plus élevés telles que les distillats moyens, les résidus sous vide, les gazoles, les distillats moyens issus du FCC (LCO et HCO) et les résidus d'hydrocraquage.

La charge à traiter est dans la majeure partie des cas une coupe $C_{10}^+$ de point d'ébullition initial supérieur à environ 175 °C, de préférence une coupe lourde à point d'ébullition d'au moins 280°C et avantageusement à point d'ébullition d'au moins 380°C. Le procédé selon l'invention est particulièrement adapté pour traiter des distillats paraffiniques tels que les distillats moyens qui englobent les gazoles, les kérosènes, les carburéacteurs, les distillats sous vide et toutes autres fractions dont le point d'écoulement et la viscosité doivent être adaptés pour rentrer dans le cadre des spécifications

Les charges qui peuvent être traitées selon le procédé de l'invention peuvent contenir des paraffines, des oléfines, des naphtènes, des aromatiques et aussi des hétérocycles et avec une proportion importante de n-paraffines de haut poids moléculaire et de paraffines très peu branchées également de haut poids moléculaire.

La réaction est conduite de façon à ce que le taux des réactions de craquage reste suffisamment faible pour rendre le procédé économiquement viable. Le taux des réactions de craquage est généralement inférieur à 40% poids, de préférence inférieur à 30% et avantageusement à 20%.

Des charges typiques qui peuvent être traitées avantageusement selon l'invention possèdent en général un point d'écoulement au dessus de 0°C. Les produits résultant du traitement selon le procédé ont des points d'écoulement inférieurs à 0°C et de préférence inférieurs à environ -10°C.

Ces charges possèdent généralement des teneurs en n-paraffines et en paraffines très peu branchées, à plus de 10 atomes de carbone et à haut poids moléculaire, souvent supérieures à 30 % et jusqu'à environ 90 %, voire dans certains cas supérieures à 90 % poids. Le procédé est particulièrement intéressant lorsque cette proportion est d'au moins 60 % poids.

On peut citer comme exemples d'autres charges traitables selon l'invention et à titre non limitatif, les bases pour huiles lubrifiantes, les paraffines de synthèse issues du procédé Fischer-Tropsch, les polyalphaoléfines à haut point d'écoulement, les huiles de synthèse etc... Le procédé peut également s'appliquer à d'autres composés contenant une chaîne n-alcane tels que définis précédemment, par exemple des composés n-alkylcycloalcanes, ou comportant au moins un groupe aromatique. Les charges décrites ci-dessus peuvent être additivées d'un ou plusieurs composés soufrés tel que à titre d'exemple non limitatif le diméthyldisulfure (DMDS).

Les conditions opératoires dans lesquelles s'opère le procédé de l'invention sont les suivantes:

- la température de réaction est comprise entre 170 et 500°C et de préférence entre 180 et 470°C, avantageusement 190-450°C ;

- la pression est comprise entre 1 et 250 bar et de préférence entre 10 et 200 bar;

- la vitesse volumique horaire (wh exprimée en volume de charge injectée par unité de volume de catalyseur et par heure) est comprise entre environ 0,05 et environ 100 et de préférence entre environ 0,1 et environ 30 h$^{-1}$.

Le contact entre la charge et le catalyseur est réalisé en présence d'hydrogène. Le taux d'hydrogène utilisé et exprimé en litres d'hydrogène par litre de charge est compris entre 50 et environ 2000 litres d'hydrogène par litre de charge et de préférence entre 100 et 1500 litres d'hydrogène par litre de charge.

La charge à traiter possède de préférence une teneur en composés azotés inférieure à environ 200 ppm poids et de préférence inférieure à 100 ppm poids. La teneur en soufre est inférieure à 1000 ppm poids, de préférence inférieure à 500 ppm et de manière encore plus préférée inférieure à 200 ppm poids. La teneur en métaux de la charge, tels que Ni ou V, est extrêmement réduite, c'est-à-dire inférieure à 50 ppm poids, de manière préférée inférieure à 10 ppm poids et de manière encore plus préférée inférieure à 2 ppm poids.

Ledit procédé selon l'invention permet d'obtenir

Les composés obtenus par sont essentiellement monobranchés, dibranchés et multibranchés et souvent avec des groupes méthyles.

Les exemples qui suivent illustrent l'invention sans toutefois en limiter la portée.

**Exemple 1 :** Préparation d'un support contenant une zéolithe NU-10 de type structural TON

Un support de catalyseur d'amélioration du point d'écoulement contenant une zéolithe NU-10 de type structural TON a été fabriqué en grande quantité de façon à pouvoir préparer différents catalyseurs à base du même support. Pour cela on utilise 45,2 % poids d'une zéolithe NU-10 possédant un rapport Si/Al global (mesuré par fluorescence X) de 30,2 et un rapport atomique mesuré par adsorption atomique de Na/Al=0,005, que l'on mélange à 54,8 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% ( 7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm.

Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 215 m$^2$/g, un volume poreux de 0,62 cm$^3$/g et une distribution en taille de pore monomodale centrée sur 10 nm. L'analyse de la matrice par la diffraction des rayons X révèle que celle ci est composée d'alumine gamma cubique de faible cristallinité et de zéolithe NU-10 de type structural TON. Ce support est dénommé C1.

**Exemple 2 :** Préparation de catalyseurs pour l'amélioration du point d'écoulement contenant une zéolithe NU-10

Les extrudés obtenus dans l'exemple 1 sont imprégnés par une solution aqueuse renfermant du biborate d'ammonium de manière à déposer environ 1,6% poids de B2O3. Après maturation à température ambiante dans une atmosphère saturée en eau, les extrudés imprégnés sont séchés pendant une nuit à 120°C puis calcinés à 550°C sous air sec. On obtient un support dopé au bore nommé C1B. Un autre support C1Si a été obtenu par la même procédure que le support dopé C1B mais en remplaçant dans la solution d'imprégnation le précurseur de bore par l'émulsion de silicone Rhodorsil EP1 de manière à déposer 2% poids de SiO$_2$. Enfin, un support C1BSi a été obtenu par la même procédure que les catalyseurs ci-dessus mais en utilisant une solution aqueuse renfermant le biborate d'ammonium et l'émulsion de silicone Rhodorsil EP1 et les mêmes conditions opératoires. On prepare aussi un autre support dopé en ajoutant du fluor par imprégnation à sec d'une solution d'acide fluorhydrique diluée de manière à déposer environ 1% poids de fluor sur le support C1BSi. Après séchage pendant une nuit à 120°C et calcination à 550°C pendant 2 heures sous air sec on obtient le support dopé C1BSiF

Les supports précédemment préparés C1, C1B, C1Si, C1BSi et C1BiSF sont en ensuite imprégnés à sec par une solution de chlorure de platine tétramine [Pt(NH3)4]Cl2, puis de nouveau calcinés sous air à 550°C. La teneur finale en platine des catalyseurs finaux, dénommés Pt-C1, Pt-C1B, Pt-C1Si, Pt-C1BSi et Pt-C1BiSF, ainsi obtenus est d'environ 0,6% poids par rapport à l'ensemble du catalyseur.

Les compositions des catalyseurs ainsi préparés sont indiquées dans le tableau 1.

Tableau 1 :

| Caractéristiques des catalyseurs Pt-C1 | | | | | |
|---|---|---|---|---|---|
| Catalyseur | Pt-C1 | Pt-C1B | Pt-C1Si | Pt-C1 Bsi | Pt-C1BsiF |
| B$_2$O$_3$ (% pds) | 0 | 1,5 | 0 | 1,6 | 1,4 |
| SiO$_2$ (% pds) global | 43,5 | 42,8 | 44,4 | 43,7 | 43,3 |
| F (% pds) | 0 | 0 | 0 | 0 | 0,95 |
| Pt (% poids) | 0,66 | 0,68 | 0,67 | 0,69 | 0,69 |
| Complément à 100% composé majoritairement de Al$_2$O$_3$ (% pds) | 55,84 | 55,02 | 54,93 | 54,01 | 53,66 |

**Exemple 3 :** Comparaison des catalyseurs en amélioration du point d'écoulement d'un résidu d'hydrocraquage

Le catalyseur a été évalué sur un résidu d'hydrocraquage issu d'un distillat sous vide pour préparer une huile de base.

Les caractéristiques de la charge utilisée sont reportées ci-après :

| | |
|---|---|
| Teneur en soufre (ppm poids) | 21 |
| Teneur en azote (ppm poids) | 3 |
| Point d'écoulement (°C) | + 38 |
| Point initial | 321 |
| 10% | 385 |
| 50% | 449 |
| 90% | 531 |
| Point final | 556 |

Le catalyseur est préalablement réduit sous hydrogène à 450°C avant le test catalytique in situ dans le réacteur. Cette réduction s'effectue par paliers. Elle consiste en un palier à 150°C de 2 heures, puis une montée en température jusqu'à 450°C à la vitesse de 1°C/min, puis un palier de 2 heures à 450°C. Durant ce protocole de réduction, le débit d'hydrogène est de 1000 litres d'$H_2$ par litre de catalyseur.

Les conditions opératoires dans lesquelles sont réalisées les tests catalytiques sont les suivantes, une pression totale de 12 MPa, une vitesse volumique horaire 1,2 $h^{-1}$ et un débit d'hydrogène de 1000 litres d'$H_2$ par litre de charge. Les températures de réaction pour obtenir 40% de conversion nette en composés 380 sont reportées dans le tableau 2.

La conversion nette est exprimée comme suit :

$$\text{Conversion nette} = (\% \text{ poids de } 380^- \text{ dans les effluents} - \% \text{ poids de } 380 \text{ dans la charge})/(\% \text{ poids de } 380^+ \text{ dans la charge})$$

Tableau 2 :

| Température de conversion pour obtenir 40% de conversion nette | | | | | |
|---|---|---|---|---|---|
| | **Pt-C1** | **Pt-C1B** | **Pt-C1Si** | **Pt.C1BSi** | **Pt-C1BSiF** |
| **T°C** | 380 | 378 | 377 | 374 | 371 |

Le tableau 2 met en évidence que les catalyseurs selon l'invention Pt-C1B, Pt-C1Si, Pt-C1BSi et Pt-C1BSiF sont plus actifs que le catalyseur non dopé Pt-C1.

Dans le tableau 3 figurent les rendements en huiles de base pour un point d'écoulement de -15°C.

Tableau 3 :

| Rendement en huile (% poids) pour un point d'écoulement de -15°C | | | | | |
|---|---|---|---|---|---|
| | **Pt-C1** | **Pt-C1B** | **Pt-C1Si** | **Pt-C1BSi** | **Pt-C1BSiF** |
| Rendement huile (%poids) | 82 | 83 | 84 | 87 | 88 |

Le tableau 3 met en évidence que les catalyseurs selon l'invention Pt-C1B, Pt-C1Si, Pt-C1BSi et Pt-C1BSiF conduisent à des rendements en huile supérieur au catalyseur non dopé Pt-C1.

**Exemple 4 :** Préparation d'un support contenant une zéolithe ZSM-23 de type structural MTT

Un support de catalyseur d'amélioration du point d'écoulement contenant une zéolithe ZSM-23 de type structural MTT a été fabriqué en grande quantité de façon à pouvoir préparer différents catalyseurs à base du même support. Pour cela on utilise 40,2 % poids d'une zéolithe ZSM-23 possédant un rapport Si/Al global (mesuré par fluorescence X) de 35,2 et un rapport atomique mesuré par adsorption atomique de Na/Al=0,004, que l'on mélange à 59,8 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 290 $m^2$/g et une distribution en taille de pore monomodale centrée sur 11 nm. L'analyse de la matrice par la diffraction des rayons X révèle que celle ci est composée d'alumine gamma cubique de faible cristallinité et de zéolithe ZSM-23 de type structural MTT. Ce support est dénommé C2.

**Exemple 5 :** Préparation de catalyseurs pour l'amélioration du point d'écoulement contenant une zéolithe ZSM-23

Les extrudés obtenus dans l'exemple 4 sont imprégnés par une solution aqueuse renfermant du biborate d'ammonium. Après maturation à température ambiante dans une atmosphère saturée en eau, les extrudés imprégnés sont séchés pendant une nuit à 120°C puis calcinés à 550°C sous air sec. On obtient un support dopé au bore nommé C2B. Un autre support C2Si a été obtenu par la même procédure que le support dopé C2B mais en remplaçant dans la solution d'imprégnation le précurseur de bore par l'émulsion de silicone Rhodorsil EP1. Enfin, un support C2BSi a été obtenu par la même procédure que les catalyseurs ci-dessus mais en utilisant une solution aqueuse renfermant le biborate d'ammonium et l'émulsion de silicone Rhodorsil EP1 et les mêmes conditions opératoires. On prépare aussi un autre support dopé en ajoutant du fluor par imprégnation à sec d'une solution d'acide fluorhydrique diluée de manière à déposer environ 1% poids de fluor sur le support C2BSi. Après séchage pendant une nuit à 120°C et calcination à 550°C pendant 2 heures sous air sec on obtient le support dopé C2BSiF.

Les supports précédemment préparés C2, C2B, C2Si, C2BSi et C2BiSF sont en ensuite imprégnés à sec par une solution de chlorure de platine tétramine [Pt(NH3)4]Cl2, puis de nouveau calcinés sous air à 550°C. La teneur finale en platine des catalyseurs finaux, dénommés Pt-C2, Pt-C2B, Pt-C2Si, Pt-C2BSi et Pt-C2BiSF, ainsi obtenus est d'environ 0,6% poids par rapport à l'ensemble du catalyseur.

Les compositions des catalyseurs ainsi préparés sont indiquées dans le tableau 4.

Tableau 4 :

| Caractéristiques des catalyseurs Pt-C2 | | | | | |
|---|---|---|---|---|---|
| Catalyseur | Pt-C2 | Pt-C2B | Pt-C2Si | Pt-C2BSi | Pt-C2BsiF |
| $B_2O_3$ (% pds) | 0 | 1,8 | 0 | 1,3 | 1,7 |
| $SiO_2$ (% pds) global | 38,8 | 38,1 | 39,7 | 39,2 | 38,8 |
| F (% pds) | 0 | 0 | 0 | 0 | 0,92 |
| Pt (% poids) | 0,70 | 0,66 | 0,68 | 0,65 | 0,67 |
| Complément à 100% composé majoritairement de $Al_2O_3$ (% pds) | 60,5 | 59,44 | 59,62 | 58,85 | 57,91 |

Exemple 5b: Comparaison des catalyseurs en amélioration du point d'écoulement d'un résidu d'hydrocraquage

Le catalyseur a été évalué sur un résidu d'hydrocraquage issu d'un distillat sous vide pour préparer une huile de base.

La charge utilisée est celle décrite dans l'exemple 3

Le catalyseur est préalablement réduit sous hydrogène à 450°C avant le test catalytique in situ dans le réacteur. Cette réduction s'effectue par paliers. Elle consiste en un palier à 150°C de 2 heures, puis une montée en température jusqu'à 450°C à la vitesse de 1°C/min, puis un palier de 2 heures à 450°C. Durant ce protocole de réduction, le débit d'hydrogène est de 1000 litres d'$H_2$ par litre de catalyseur.

Les conditions opératoires dans lesquelles sont réalisées les tests catalytiques sont les suivantes, une pression totale de 12 MPa, une vitesse volumique horaire 1,2 h$^{-1}$ et un débit d'hydrogène de 1000 litres d'$H_2$ par litre de charge. Les températures de réaction pour obtenir 40% de conversion nette en composés 380$^-$ sont reportées dans le tableau 5.

La conversion nette est définie comme dans l'exemple 3.

Tableau 5 :

| | Pt-C2 | Pt-C2B | Pt-C2Si | Pt-C2BSi | Pt-C2BSiF |
|---|---|---|---|---|---|
| Température de conversion pour obtenir 40% de conversion nette | | | | | |
| T°C | 376 | 375 | 374 | 371 | 369 |

Le tableau 5 met en évidence que les catalyseurs selon l'invention Pt-C1B, Pt-C1Si, Pt-C1BSi et Pt-C1BSiF sont plus actifs que le catalyseur non dopé Pt-C1.

Dans le tableau 6 figurent les rendements en huiles de base pour un point d'écoulement de -15°C.

Tableau 6 :

| | Pt-C2 | Pt-C2B | Pt-C2Si | Pt-C2BSi | Pt-C2BSiF |
|---|---|---|---|---|---|
| Rendement en huile (% poids) pour un point d'écoulement de -15°C | | | | | |
| Rendement huile (%poids) | 80 | 82 | 83 | 85 | 87 |

Le tableau 6 met en évidence que les catalyseurs selon l'invention Pt-C2B, Pt-C2Si, Pt-C2BSi et Pt-C2BSiF conduisent à des rendements en huile supérieur au catalyseur non dopé Pt-C2.

**Exemple 6 :** Préparation d'un support contenant une zéolithe ferrierite de type structural FER

Un support de catalyseur d'amélioration du point d'écoulement contenant une zéolithe ferrierite de type structural a été fabriqué en grande quantité de façon à pouvoir préparer différents catalyseurs à base du même support. Pour cela on utilise 49,6 % poids d'une zéolithe ferrierite possédant un rapport Si/Al global (mesuré par fluorescence X) de 9,9 et un rapport atomique mesuré par adsorption atomique de Na/Al=0,006, que l'on mélange à 50,4 % poids d'une matrice composée de boehmite tabulaire ultrafine ou gel d'alumine commercialisée sous le nom SB3 par la société Condéa Chemie Gmbh. Ce mélange de poudre a été ensuite mélangé à une solution aqueuse contenant de l'acide nitrique à 66% (7% poids d'acide par gramme de gel sec) puis malaxé pendant 15 minutes. A l'issue de ce malaxage, la pâte obtenue est passée à travers une filière ayant des orifices cylindriques de diamètre égal à 1,4 mm. Les extrudés sont ensuite séchés pendant une nuit à 120°C puis calcinés à 550°C pendant 2 heures sous air humide contenant 7,5% volume d'eau. On obtient ainsi des extrudés cylindriques de 1,2 mm de diamètre, ayant une surface spécifique de 220 m$^2$/g, un volume poreux de 0,4 cm$^3$/g et une distribution en taille de pore monomodale centrée sur 10 nm. L'analyse de la matrice par la diffraction des rayons X révèle que celle ci est composée d'alumine gamma cubique de faible cristallinité et de zéolithe ferrierite de type structural FER. Ce support est dénommé C3.

**Exemple 7 :** Préparation de catalyseurs pour l'amélioration du point d'écoulement contenant une zéolithe ferrierite

Les extrudés obtenus dans l'exemple 6 sont imprégnés par une solution aqueuse renfermant du biborate d'ammonium. Après maturation à température ambiante dans une atmosphère saturée en eau, les extrudés imprégnés sont séchés pendant une nuit à 120°C puis calcinés à 550°C sous air sec. On obtient un support dopé au bore nommé C3B. Un autre support C3Si a été obtenu par la même procédure que le support dopé C3B mais en remplaçant dans la solution d'imprégnation le précurseur de bore par l'émulsion de silicone Rhodorsil EP1. Enfin, un support C3BSi a été obtenu par la même procédure que les catalyseurs ci-dessus mais en utilisant une solution aqueuse renfermant le biborate d'ammonium et l'émulsion de silicone Rhodorsil EP1 et les mêmes conditions opératoires. On prépare aussi un autre support dopé en ajoutant du fluor par imprégnation à sec d'une solution d'acide fluorhydrique diluée de manière à déposer environ 1% poids de fluor sur le support C3BSi. Après séchage pendant une nuit à 120°C et calcination à 550°C pendant 2 heures sous air sec on obtient le support dopé C3BSiF

Les supports précédemment préparés C3, C3B, C3Si, C3BSi et C3BiSF sont en ensuite imprégnés à sec par une solution de chlorure de platine tétramine [Pt(NH3)4]Cl2, puis de nouveau calcinés sous air à 550°C. La teneur finale en platine des catalyseurs finaux, dénommés Pt-C3, Pt-C3B, Pt-C3Si, Pt-C3BSi et Pt-C3BiSF, ainsi obtenus est d'environ 0,6% poids par rapport à l'ensemble du catalyseur. Les compositions des catalyseurs ainsi préparés sont indiquées dans le tableau 7.

Tableau 7 :

| Caractéristiques des catalyseurs Pt-C3 | | | | | |
|---|---|---|---|---|---|
| Catalyseur | Pt-C3 | Pt-C3B | Pt-C3Si | Pt-C3BSi | Pt-C3BsiF |
| B$_2$O$_3$ (% pds) | 0 | 1,5 | 0 | 1,6 | 1,5 |
| SiO$_2$ (% pds) global | 44,8 | 44,1 | 45,7 | 45,0 | 44,5 |
| F (% pds) | 0 | 0 | 0 | 0 | 0,93 |
| Pt (% poids) | 0,65 | 0,68 | 0,69 | 0,63 | 0,71 |
| Complément à 100% composé majoritairement de Al$_2$O$_3$ (% pds) | 54,55 | 53,72 | 53,61 | 52,77 | 52,36 |

**Exemple 8 :** Comparaison des catalyseurs en amélioration du point d'écoulement d'un résidu d'hydrocraquage

Le catalyseur a été évalué sur un résidu d'hydrocraquage issu d'un distillat sous vide pour préparer une huile de base.

La charge utilisée est celle décrite dans l'exemple 3

Le catalyseur est préalablement réduit sous hydrogène à 450°C avant le test catalytique in situ dans le réacteur. Cette réduction s'effectue par paliers. Elle consiste en un palier à 150°C de 2 heures, puis une montée en température jusqu'à 450°C à la vitesse de 1 °C/min, puis un palier de 2 heures à 450°C. Durant ce protocole de réduction, le débit d'hydrogène est de 1000 litres d'H$_2$ par litre de catalyseur.

Les conditions opératoires dans lesquelles sont réalisées les tests catalytiques sont les suivantes, une pression totale de 12 MPa, une vitesse volumique horaire 1,2 h$^{-1}$ et un débit d'hydrogène de 1000 litres d'H$_2$ par litre de charge. Les températures de réaction pour obtenir 40% de conversion nette en composés 380 sont reportées dans le tableau 8.

La conversion nette est définie comme dans l'exemple 3.

Tableau 8 :

| Température de conversion pour obtenir 40% de conversion nette | | | | |
|---|---|---|---|---|
| | **Pt-C3** | **Pt-C3B** | **Pt-C3Si** | **Pt-C3BSi** | **Pt-C3BSiF** |
| **T°C** | 350 | 347 | 344 | 344 | 341 |

Le tableau 8 met en évidence que les catalyseurs selon l'invention Pt-C3B, Pt-C3Si, Pt-C3BSi et Pt-C3BSiF sont plus actifs que le catalyseur non dopé Pt-C3.

Dans le tableau 9 figurent les rendements en huiles de base pour un point d'écoulement de -15°C.

Tableau 9 :

| Rendement en huile (% poids) pour un point d'écoulement de -15°C | | | | |
|---|---|---|---|---|
| | **Pt-C3** | **Pt-C3B** | **Pt-C3Si** | **Pt-C3BSi** | **Pt-C3BSiF** |
| Rendement huile (%poids) | 67 | 67,5 | 68 | 71 | 72 |

Le tableau 9 en évidence que les catalyseurs selon l'invention Pt-C3, Pt-C3Si, Pt-C3BSi et Pt-C3BSiF conduisent à des rendements en huile supérieurs au catalyseur non dopé Pt-C3.

**Revendications**

1. Procédé pour la réduction du point d'écoulement de charges hydrocarbonées avec un catalyseur renfermant au moins une matrice, au moins une zéolithe choisie dans le groupe formé par les zéolithes de type structural MTT, TON, FER, au moins un élément hydro-déshydrogénant, au moins un élément promoteur déposé choisi dans le groupe formé par le bore, le silicium et le phosphore et au moins un élément du groupe VII A.

2. Procédé selon la revendication 1, dans lequel le catalyseur renferme au moins une zéolithe choisie dans le groupe formé par Theta, ISI-1, NU-10, KZ-2, ZSM-22, ZSM-23, EU-13, ISI-4, KZ-1, SSZ-32, Ferrierite, FU-9, NU-23, ZSM-35 et ISI-6.

3. Procédé selon l'une des revendications précédentes dans lequel l'élément hydro-déshydrogénant est choisi parmi les éléments des groupes VIII et VI B.

4. Procédé selon la revendication 3 contenant du platine et/ou du palladium.

5. Procédé selon l'une des revendications précédentes dans lequel la zéolite est choisie dans le groupe formé par les zéolites NU-10, EU-13 et NU-23.

6. Procédé selon l'une des revendications précédentes dans lequel le(s) élément(s) hydro-déshydrogénant noble est sous forme métallique.

7. Procédé selon l'une des revendications précédentes dans lequel le catalyseur contient également au moins un élément du groupe VIIB.

8. Procédé selon l'une des revendications précédentes opérant à 170-500°C, 1-250 bar, et une vitesse volumique horaire de 0,05-100h$^{-1}$, en présence d'hydrogène à raison de 50-2000 I/I de charge.

9. Catalyseur renfermant au moins une matrice, au moins une zéolithe choisie dans le groupe formé par les zéolithes de type structural MTT, TON, FER, au moins un élément hydro-déshydrogénant, et un élément promoteur déposé sur la matrice qui est le silicium.

**10.** Catalyseur selon la revendication 9 contenant également au moins un élément du groupe VIIA.

**11.** Catalyseur selon l'une des revendications 9 à 10, dans lequel l'élément hydro-déshydrogénant est choisi parmi les éléments des groupes VIII et VIB.

**12.** Catalyseur selon la revendication 9, contenant du platine et/ou du palladium.

**13.** Catalyseur selon l'une des revendications 9 à 12, contenant également du bore et/ou du phosphore déposés.

**14.** Catalyseur selon l'une des revendications 9 à 13 ,dans lequel le(s) élément(s) hydro-déshydrogénant noble est sous forme métallique

**15.** Catalyseur selon l'une des revendications 9 à 14, dans lequel la zéolithe est choisie dans le groupe formé par les zéolithes NU-10, EU-13 et NU-23.

**16.** Catalyseur selon l'une des revendications 9 à 15 contenant également au moins un élément du groupe VIIB.

**17.** Utilisation d'un catalyseur selon l'une des revendications 9 à 16 pour la conversion des hydrocarbures.

**Claims**

**1.** A process for reducing the pour point of hydrocarbon-containing feeds, using a catalyst comprising at least one matrix; at least one zeolite selected from the group formed by zeolites with structure type MTT, TON, PER, at least one hydro-dehydrogenating element, and at least one deposited promoter element selected from the group formed by boron, silicon and phosphorous.

**2.** A process according to claim 1, in which the catalyst contains at least a zeolithe selected from the group formed by Theta, ISI-1, NU-10, KZ-2, ZSM-22, ZSM-23, EU-13, ISI-4, KZ-1, SSZ-32, ferrierite, FU-9, NU-23, ZSM-35 and ISI-6 and at least one group VIIA element.

**3.** A process according to any one of the preceding claims, in which the hydro-dehydrogenating element is selected from group VIII and group VIB elements.

**4.** A process according to claim 3, containing platinum and/or palladium.

**5.** A process according to any one of the preceding claims, in which the zeolite is selected from the group formed by NU-10, EU-13 and NU-23 zeolites.

**6.** A process according to any one of the preceding claims, in which the noble hydro-dehydrogenating element(s) is/are in the metal form.

**7.** A process according to any one of the preceding claims, in which the catalyst also contains at least one group VIIB element.

**8.** A process according to any one of the preceding claims, carried out at 170-500°C, 1-250 bars, and at an hourly space velocity of 0.05-100 h$^{-1}$, in the presence of hydrogen in an amount of 50-2000 l/l of feed.

**9.** A catalyst comprising at least one matrix, at least one zeolite selected from the group formed by zeolites with structure type MTT, TON, PER, at least

**10.** A catalyst according to claim 9, also containing at least one group VIIA element.

**11.** A catalyst according to claim 9 or claim 10, in which the hydro-dehydrogenating element is selected from group VIII and group VIB elements.

**12.** A catalyst according to claim 1, containing platinum and/or palladium.

**13.** A catalyst according to any one of claims 9 to 12, also containing deposited boron and/or phosphorous.

**14.** A catalyst according to any one of claims 9 to 13, in which the noble hydro-dehydrogenating element(s) is/are in the metal form.

**15.** A catalyst according to any one of claims 9 to 14, in which the zeolite is selected from the group formed by NU-10, EU-13 and NU-23 zeolites.

**16.** A catalyst according to any one of claims 9 to 15, also containing at least one group VIIB element.

**17.** Use of a catalyst according to any one of claims 9 to 16, for hydrocarbon conversion.

**Patentansprüche**

**1.** Verfahren zur Verminderung des Stockpunktes von Kohlenwasserstoffbeschickungen mit einem Katalysator, der wenigstens eine Matrix, wenigstens einen Zeolith, gewählt aus der durch die Zeolithe vom Strukturtyp MTT, TON, FER gebildeten Gruppe, wenigstens ein hydrierendes-dehydrierendes Element, wenigstens ein abgeschiedenes Promotorelement, gewählt aus der durch Bor, Silizium und Phosphor gebildeten Gruppe und wenigstens ein Element der Gruppe VIIA einschließt.

**2.** Verfahren nach Anspruch 1, bei dem der Katalysator wenigstens einen Zeolith, gewählt aus der durch Theta, ISI-1, NU-10, KZ-2, ZSM-22, ZSM-23, EU-13, ISI-4, KZ-1, SSZ-32. Ferrierit, FU-9, NU-23, ZSM-35 und ISI-6 gebildeten Gruppe, umfasst.

**3.** Verfahren nach einem der vorhergehenden Ansprüche, bei dem das hydrierende-dehydrierende Element gewählt ist unter den Elementen der Gruppen VIII und VIB.

**4.** Verfahren nach Anspruch 3, das Platin und/oder Palladium enthält.

**5.** Verfahren nach einem der vorhergehenden Ansprüche, bei dem der Zeolith, gewählt ist aus der durch die Zeolithe NU-10, EU-13 und NU-23 gebildeten Gruppe.

**6.** Verfahren nach einem der vorhergehenden Ansprüche, bei dem das (die) edle(n) hydrierende(n)-dehydrierende (n) Element(e) in metallischer Form vorliegt (vorliegen).

**7.** Verfahren nach einem der vorhergehenden Ansprüche, bei dem der Katalysator auch wenigstens ein Element der Gruppe VIIB enthält.

**8.** Verfahren nach einem der vorhergehenden Ansprüche, das bei 170-500°C, 1-250 bar und einer stündlichen Volumengeschwindigkeit, von 0,05-100 h$^{-1}$ in Gegenwart von Wasserstoff bei einem Verhältnis von 50-2000 l/l Beschickung arbeitet.

**9.** Katalysator, der wenigstens eine Matrix, wenigstens einen Zeolith, gewählt aus der durch die Zeolithe vom Strukturtyp MTT, TON, FER gebildeten Gruppe, wenigstens ein hydrierendes-dehydrierendes Element und wenigstens ein auf der Matrix abgeschiedenes Promotorelement einschließt, das Silizium ist.

**10.** Katalysator nach Anspruch 9, der ebenfalls wenigstens ein Element der Gruppe VIIA enthält.

**11.** Katalysator nach einem der Ansprüche 9 bis 10, bei dem das hydrierendedehydrierende Element gewählt ist unter den Elementen der Gruppen VIII und VIB.

**12.** Katalysator nach Anspruch 9, der Platin und/oder Palladium enthält.

**13.** Katalysator nach einem der Ansprüche 9 bis 12, der ebenfalls abgeschiedenes Bor und/oder abgeschiedenen Phosphor enthält.

**14.** Katalysator nach einem der Ansprüche 9 bis 13, bei dem das (die) edle(n) hydrierende(n)-dehydrierende(n) Element(e) in metallischer Form vorliegt (vorliegen).

15. Katalysator nach einem der Ansprüche 9 bis 14, bei dem der Zeolith, gewählt ist aus der durch die Zeolithe NU-10, EU-13 und NU-23 gebildeten Gruppe.

16. Katalysator nach einem der Ansprüche 9 bis 15, der auch wenigstens ein Element der Gruppe VIIB enthält.

17. Verwendung eines Katalysators nach einem der Ansprüche 9 bis 16, zur Umwandlung der Kohlenwasserstoffe.